## Europäisches Patentamt
## European Patent Office
## Office européen des brevets

(19)

(11) Veröffentlichungsnummer : **0 316 831 B1**

(12) **EUROPÄISCHE PATENTSCHRIFT**

(45) Veröffentlichungstag der Patentschrift :
13.03.91 Patentblatt 91/11

(51) Int. Cl.⁵ : **F16H 37/12, B60S 1/16,**
**F16H 19/08**

(21) Anmeldenummer : **88118912.0**

(22) Anmeldetag : **12.11.88**

(54) **Antriebsvorrichtung, insbesondere Getriebemotor für eine Scheibenwischeranlage eines Kraftfahrzeugs.**

(30) Priorität : **17.11.87 DE 3738930**

(43) Veröffentlichungstag der Anmeldung :
**24.05.89 Patentblatt 89/21**

(45) Bekanntmachung des Hinweises auf die
Patenterteilung :
**13.03.91 Patentblatt 91/11**

(84) Benannte Vertragsstaaten :
**ES FR GB IT**

(56) Entgegenhaltungen :
**DE-C- 3 247 421**
**DE-C- 3 615 530**

(73) Patentinhaber : **SWF Auto-Electric GmbH**
**Stuttgarter Strasse 119 Postfach 135**
**W-7120 Bietigheim-Bissingen (DE)**

(72) Erfinder : **Walther, Bernd**
**Birkenweg 20**
**W-7120 Bietigheim-Bissingen (DE)**

EP 0 316 831 B1

## Beschreibung

Die Erfindung bezieht sich auf eine Antriebsvorrichtung, insbesondere auf einen Getriebemotor für eine Scheibenwischeranlage eines Kraftfahrzeugs mit den Merkmalen aus dem Oberbegriff des Anspruchs 1.

Bei einer solchen aus der DE-A-32 47 421 bekannten Antriebsvorrichtung ist das Kurbelrad auf der einen Seite über eine axial verlängerte Nabe kreisförmig am Boden des Getriebeghäuses und auf der anderen Seite über das Getriebeteil und eine einen im Kurbelrad steckenden Kurbelzapfen überdeckende Kappe punktförmig am Deckel des Getriebegehäuses axial abgestützt. In Antriebsvorrichtungen mit einem Pendelgetriebe treten insbesondere auch wegen der ungleichmäßigen Belastung große Kräfte im Lager des Kurbelrads auf, die zu einem Hin- und Herkippen des Kurbelrads und damit zu Wirkungsgradverlusten und Geräuschen führen können. Die Art der Abstützung nach der DE-A-32 47 421 genügt nicht, um das Hin- und Herkippen des Kurbelrads zu vermeiden. Man hat schon versucht, diese Mängel dadurch zu beseitigen, daß man für das Kurbelrad ein zweites Radiallager vorgesehen hat. In der Praxis hat es sich jedoch gezeigt, daß eine solche aus der DE-C-36 15 530 bekannte Antriebsvorrichtung den gestellten Anforderungen noch nicht genügt.

Der Erfindung liegt also die Aufgabe zugrunde, eine Antriebsvorrichtung mit den Merkmalen aus dem Oberbegriff des Anspruchs 1 so weiterzubilden, daß die Kippbewegungen des Kurbelrads weitgehend vermieden werden, so daß der Wirkungsgrad des Getriebes erhöht und die entstehenden Geräusche vermindert werden.

Diese Aufgabe wird erfindungsgemäß dadurch gelöst, daß man eine Antriebsvorrichtung, die die Merkmale aus dem Oberbegriff des Anspruchs 1 aufweist, zusätzlich mit den Merkmalen aus dem kennzeichnenden teil des Anspruchs 1 ausstattet.

Bei einer erfindungsgemäßen Antriebsvorrichtung wird also das Kurbelrad auf der einen Seite durch einen Ring außerhalb des Kurbelradius, d. h. weit von seiner Achse entfernt, axial abgestützt. Da sich dort jede Verkippung des Kurbelrads stark in axialer Richtung bemerkbar macht, kann man durch eine erfindungsgemäße axiale Abstützung die Kippbewegungen des Kurbelrads merklich vermindern und damit den Wirkungsgrad erhöhen und die Geräusche verringern.

Vorteilhafte Ausgestaltungen einer erfindungsgemäßen Antriebsvorrichtung kann man den Unteransprüchen entnehmen.

So wird z. B. eine Ausführung bevorzugt, bei der sich der Ring axial zwischen dem Kurbelrad und einem Deckel des Getriebegehäuses erstreckt. Dabei ist es vorteilhaft, wenn der Ring an seiner dem Kurbelrad abgewandten axialen Stirnseite einzelne über seinen Umfang verteilte und axial vorspringende Abstützbeine aufweist.

Stattet man den Ring mit den Merkmalen gemäß den Ansprüchen 5 und 6 aus, so kann man seine Formstabilität erhöhen.

Der Versthleiß am Ring wird dann besonders gering sein, wenn er gemäß Anspruch 7 verdrehsicher angeordnet ist. Außerdem kann dann gemäß Anspruch 9 an den Ring seitlich ein Deckel angeformt sein, der über eine Schnecke greift, mit der das Kurbelrad kämmt, und dessen Außenkontur der Form einer Ausbuchtung des Getriebegehäuses entspricht, in der sich die Schnecke befindet. Dadurch kann man erreichen, daß das Getriebefett weniger leicht im gesamten Getriebegehäuse verteilt wird und vor allem an der Schnecke verbleibt. Überhaupt kann man den Ring so ausbilden, daß er das Getriebefett vor allem an den Zähnen des Kurbelrads und der Schnecke hält.

Kommt es weniger auf den Verschleiß des Rings an und will man die Öffnung, die in ihm für das schwenkbare Getriebeteil notwendig ist, möglichst klein halten, so kann man den Ring gemäß Anspruch 10 dreh- oder schwenkbar anordnen. Das schwenkbare Getriebeteil kann dann bei seiner Bewegung den Ring nitnehmen, und die Öffnung im Ring kann sehr klein sein. Vorteilhafterweise wird der Ring gemäß Anspruch 11 durch einen Bund zentriert, der an das Kurbelrad angeformt ist.

Die Stabilität des Rings kann noch dadurch erhöht werden, daß gemäß Anspruch 12 die Öffnung im Ring in axialer Richtung zumindest auf der einen Seite durch einen Steg verschlossen ist. Dieser Steg befindet sich zweckmäßigerweise zwischen dem Kurbelrad und den schwenkbaren Getriebeteil, so daß er zumindest etwas zur Abstützung des Kurbelrads beitragen kann.

Zwei Ausführungen einer erfindungsgemäßen Antriebsvorrichtung mit unterschiedlichen Abstützringen sowie eine dritte Ausführung eines Abstützrings sind in den Zeichnungen dargestellt. Anhand der Figuren dieser Zeichnungen soll die Erfindung nun näher erläutert werden.

Es zeigen

Fig. 1 das erste Ausführungsbeispiel mit offenem Getriebegehäuse in einer Draufsicht in Richtung der Achse des Kurbelrades,

Fig. 2 einen Schnitt entlang der Linie II-II aus Fig. 1,

Fig. 3 eine Ansicht entsprechend der aus Fig. 1 auf ein zweites Ausführungsbeispiel,

Fig. 4 einen Schnitt entlang der Linie IV-IV aus Fig. 3,

Fig. 5 einen Schnitt entlang der Linie V-V aus Fig. 3,

Fig. 6 einen dritten Abstützring in einer Ansicht in seiner Achsrichtung,

Fig. 7 eine Ansicht des Abstützrings aus Fig. 6 in Richtung des Pfeiles A und

Fig. 8 einen Schnitt entlang der Linie VIII-VIII aus Fig. 6.

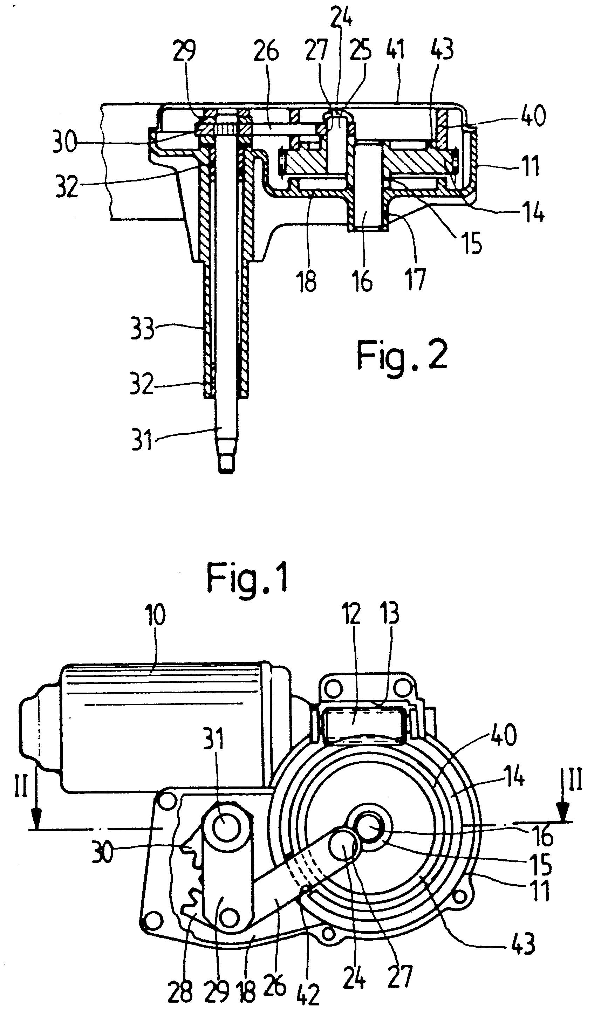

Die in den Fig. 1 bis 5 gezeigten Ausführungsbeispiele einer erfindungsgemäßen Antriebsvorrichtung sind Getriebemotoren für eine Scheibenwischeranlage eines Kraftfahrzeugs. Sie umfassen ein zylindrisches Gehäuse 10 für den eigentlichen Elektromotor und ein daran angeflanschtes Getriebegehäuse 11. Aus dem Motorgehäuse 10 ragt die Motorwelle als Schnecke 12 in eine Ausbuchtung 13 des Getriebegehäuses 11 hinein. Mit der Schneckenwelle 12 kämmt ein Kurbelrad 14, das mit einer Nabe 15 auf einem Stehbolzen 16 drehbar gelagert ist. Dieser ist verdrehsicher in ein Befestigungsauge 17 eingepreßt, das sich im Boden 18 des Getriebehäuses 11 befindet.

Exzentrisch zu dem Stehbolzen 16 trägt das Kurbelrad 14 einen Bolzen 25, der über die den Boden 18 des Getriebegehäuses 11 abgewandte Seite des Kurbelrades 14 vorsteht und den eine Koppelstange 26 mit einer Bohrung 27 übergreift. Über der Koppelstange 26 ist der Exzenterbolzen 25 von einer Kappe 24 abgedeckt. An ihrem dem Exzenterbolzen 25 entfernten Ende ist die Koppelstange 26 zu einem Zahnsegment 28 geformt, das von einer Schwinge 29 in Eingriff mit einem weiteren Zahnsegment 30 gehalten wird, das drehfest auf einer Abtriebswelle 31 sitzt. Die Abtriebswelle 31 verläuft parallel zum Stehbolzen 16 und ist über zwei Lagerbuchsen 32 in einem Lagerauge 33 des Getriebegehäuses 11 drehbar gelagert. Die Schwinge 29 ist mit ihrem einen Ende drehbar auf der Abtriebswelle 31 und mit ihrem anderen Ende drehbar an der Koppelstange 26 gelagert, wobei dort die Lagerachse und die Achse des Zahnsegments 28 zusammenfallen.

Im Betrieb wird das Kurbelrad 14 vom Elektromotor über die Schnecke 12 in eine bestimmte Drehrichtung angetrieben und nimmt dabei den Exzenterbolzen 25 mit, der somit um die Achse des Stehbolzens 16 kreist. Die Koppelstange 26 muß der Bewegung des Exzenterbolzens 25 folgen und eine hin- und hergehende Bewegung ausführen, der eine Schwenkbewegung überlagert ist. Die hin- und hergehende Bewegung der Koppelstange 26 wird über die beiden Zahnsegmente 28 und 30 in eine pendelnde Drehwegung der Abtriebswelle 31 umgewandelt. Während der Hin- und Herbewegung der Koppelstange 26 ist das Kurbelrad 14 Kippmomenten ausgesetzt, die in den jeweiligen Umkehrlagen wechseln.

Das Kurbelrad 14 stützt sich auf der einen Seite über die Nabe 15 axial am Boden 18 des Gehäuses 11 ab.

Um nun die Kippbewegungen des Kurbelrades 14 zu verringern, ist es auch auf der anderen Seite durch einen Ring 40 axial abgestützt, dessen Radius größer ist als der dem Kurbelradius entsprechende Abstand der Achse des Exzenterbolzens 25 von der Achse des Stehbolzens 16. Auf diese Weise kann man das Kurbelrad 14 nahe an seinem Umfang axial abstützen, wo sich die Kippbewegungen des Kurbelrades 14 stark auswirken. Der Ring 40 erstreckt sich axial zwischen dem Kurbelrad 14 und einem das Getriebegehäuse 11 verschließenden Deckel 41. Er hat eine Öffnung 42, durch die die Koppelstange 26 aus dem Inneren des Rings nach außen durchtreten kann.

Bei der Ausführung nach den Fig. 1 und 2 ist der Ring 40 drehbar gegenüber dem Gehäuse 11 angeordnet. Die Breite seiner Öffnung 42 kann deshalb im wesentlichen der Breite der Koppelstange 26 entsprechen, da der Ring 40 der Schwenkbewegung der Koppelstange 26 folgen kann. Im Betrieb wird der Ring 40 also von der Koppelstange 26 hin- und hergeschwenkt. Zur Zentrierung des Rings 40 ist am Kurbelrad 14 ein axial vorstehender umlaufender Bund 43 vorgesehen, der innen am Ring 40 anliegt.

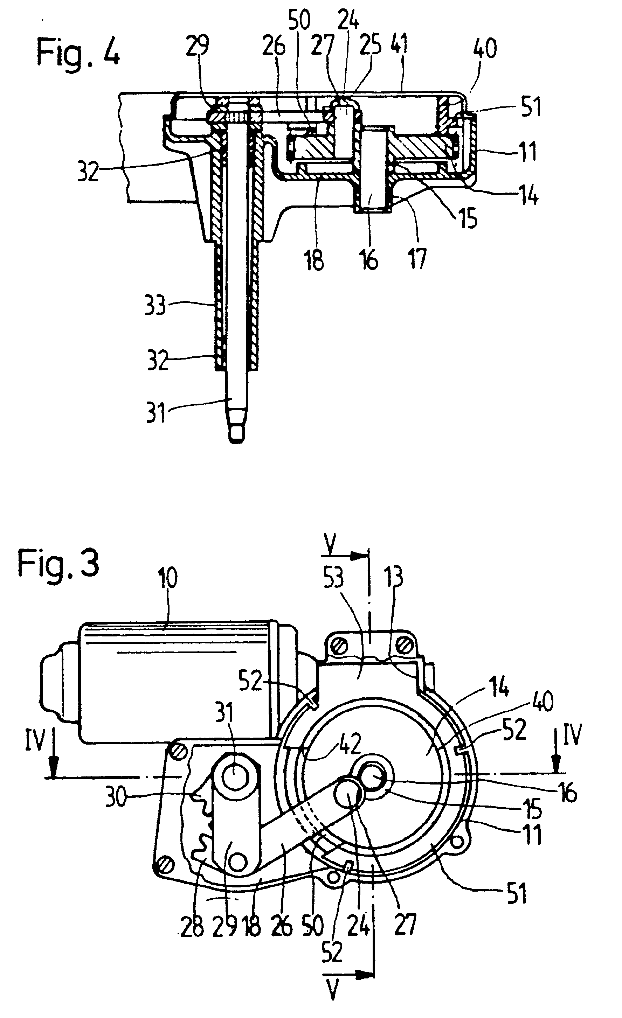

Bei der Ausführung nach den Fig. 3 bis 5 ist der Abstützring 40 fest im Gehäuse 11 angeordnet. Deshalb muß seine Öffnung 42 in Umfangsrichtung so groß sein, daß sich die Koppelstange 26 frei darin bewegen kann. Im Gegensatz zu der Ausführung nach den Fig. 1 und 2 ist bei der Ausführung nach den Fig. 3 bis 5 außerdem die Öffnung 42 in axialer Richtung auf der einen Seite durch einen Steg 50 verschlossen, der sich zwischen dem Kurbelrad 14 und der Koppelstange 26, die einen gewissen Abstand vom Kurbelrad besitzt, befindet. Der Steg 50 stützt das Kurbelrad 14 auch im Bereich der Öffnung 42 etwas ab und erhöht außerdem die Formstabiltät des Rings 40.

Außen ist an den Ring 40 ein radialer Flansch 51 angeformt, der ebenfalls die Formstabilität erhöht. Außerdem weist der Flansch 51 drei Aussparungen auf, in die jeweils eine an das Gehäuse 11 angeformte Rippe 52 radial eingreift und auf diese Weise als Verdrehschutz für den Ring 40 fungiert.

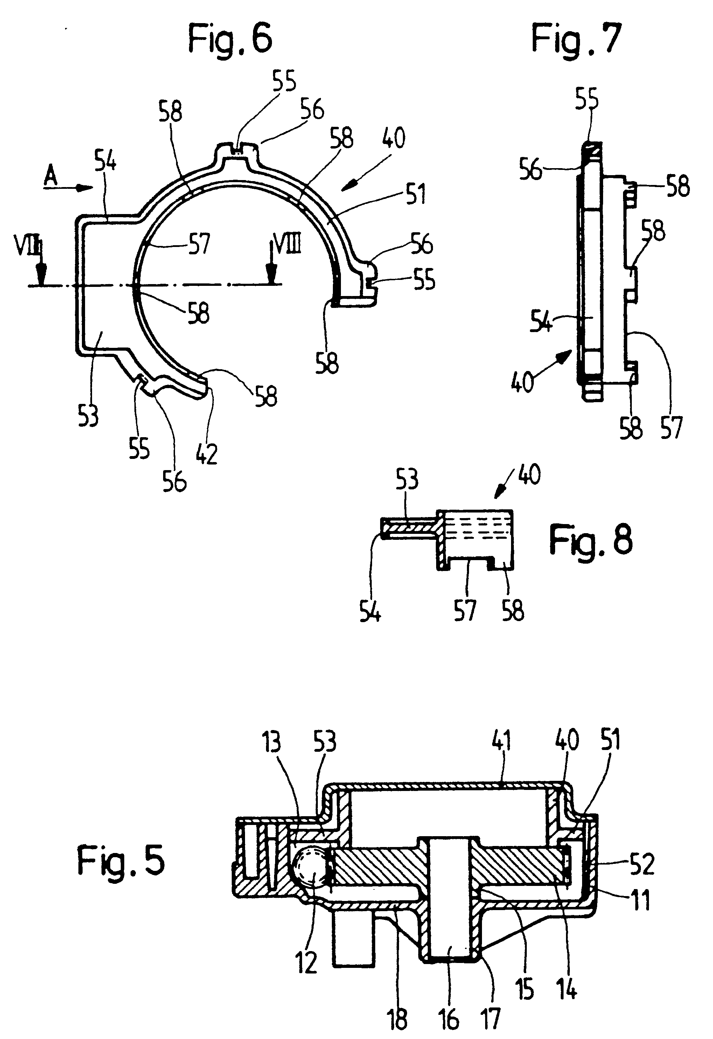

Im Bereich der Ausbuchtung 13 erweitert sich der Flansch 51 radial nach außen zu einem Deckel 53, dessen Außenkontur an die Form der Ausbuchtung 13 des Gehäusese 11 angepaßt ist und der die Ausbuchtung 13 über der Schnecke 12 verschließt. Dies ist besonders deutlich aus Fig. 5 erkennbar. Der Deckel 53 grenzt den Raum ein, in den in das Gehäuse eingespritztes und zur Schmierung der Zähne des Kurbelrades und der Schnecke dienendes Getriebefett entweichen kann. Auch der radial bis nahe an das Gehäuse 11 heranreichende Flansch 51 trägt mit dazu bei, daß das Getriebefett an den Zähnen des Kurbelrades verbleibt.

Die in den Fig. 6 bis 8 gezeigte Ausführung eines Abstützrings 40 entspricht im wesentlichen der aus den Fig. 3 bis 5. Es soll deshalb nur auf die Unterschiede eingegangen werden.

Die Formstabilität des Flansches 51 ist durch eine an seinem Außenrand umlaufende Rippe 54 verstärkt, die auch der Außenkontur des Deckels 53 folgt. Zwischen dem Deckel 53 und kurzen Abschnitten an den Ausnehmungen 55 für die Rippen 52 des Gehäuses 11 ist die radiale Breite des Flansches 51 nach den Fig. 6 bis 8 geringer als die des Flansches 51 aus den Fig. 3 bis 5. Die die Ausnehmungen 55 aufweisenden Bereiche 56 ragen deshalb radial über den Flansch 51 hinaus.

Wie insbesondere aus Fig. 7 hervorgeht, weist der Ring 40 an seiner Stirnseite 57, die im Einbauzustand dem Kurbelrad 14 abgewandt ist, einzelne über seinen Umfang verteilte und axial vorspringende Abstützbeine 58 auf. Insbesondere befindet sich jeweils ein Abstützbein 58 unmittelbar zu beiden Seiten der Öffnung 42 für eine Koppelstange 26, so daß der Abstand der beiden der Öffnung 42 benachbarten Abstützbeine möglichst gering ist. Die Abstützbeine 58 haben den Vorteil, daß sich Unebenheiten in einem Deckel, an dem der Ring 40 anliegt, nicht so stark auf die Lage des Rings auswirken.

**Ansprüche**

1. Antriebsvorrichtung, insbesondere Getriebemotor für eine Scheibenwischeranlage eines Kraftfahrzeugs, mit einem Getriebegehäuse (11) für ein Kurbelrad (14), das auf seiner einen Seite drehbar im Getriebegehäuse (11) gelagert und axial abgestützt ist und an dem auf seiner anderen Seite exzentrisch ein zu einem nachgeordneten Pendelgetriebe gehörendes Getriebeteil (26) schwenkbar angelenkt ist, wobei das Kurbelrad (14) auch auf seiner anderen Seite axial abgestützt ist, dadurch gekennzeichnet, daß das Kurbelrad (14) auf seiner anderen Seite außerhalb des Kurbelradius durch einen Ring (40) axial abgestützt ist und daß der Ring (40) eine Öffnung (42) zum Durchtritt des Getriebeteils (26) aufweist und bezüglich des Kurbelrades (14) zentriert ist.

2. Antriebsvorrichtung nach Anspruch 1, dadurch gekennzeichnet, daß sich der Ring (40) axial zwischen dem Kurbelrad (14) und einem Deckel (41) des Getriebegehäuses (11) erstreckt.

3. Antriebsvorrichtung nach Anspruch 1 oder 2, dadurch gekennzeichnet, daß der Ring (40) an seiner dem Kurbelrad (14) abgewandten axialen Stirnseite (57) einzelne über seinen Umfang verteilte und axial vorspringende Abstützbeine (58) aufweist.

4. Antriebsvorrichtung nach Anspruch 3, dadurch gekennzeichnet, daß sich unmittelbar zu beiden Seiten der Öffnung (42) jeweils ein Abstützbein (58) befindet.

5. Antriebsvorrichtung nach einem der Ansprüche 1 bis 4, dadurch gekennzeichnet, daß an den Ring (40) außen ein Flansch (51) angeformt ist

6. Antriebsvorrichtung nach Anspruch 5, dadurch gekennzeichnet, daß der Flansch (51) an seiner Außenkante eine umlaufende Rippe (54) trägt.

7. Antriebsvorrichtung nach einem der Ansprüche 1 bis 6, dadurch gekennzeichnet, daß der Ring (40) verdrehsicher angeordnet ist.

8. Antriebsvorrichtung nach Anspruch 7, dadurch gekennzeichnet, daß an das Getriebegehäuse (11) wenigstens eine Rippe (52) angeformt ist, die in eine entsprechende Ausnehmung (55) des Rings (40) eingreift, die sich vorzugsweise an einem radialen Ansatz (56) des Rings (40) befindet.

9. Antriebsvorrichtung nach Anspruch 7 oder 8, dadurch gekennzeichnet, daß das Kurbelrad (14) mit einer Schnecke (12) kämmt und daß an den Ring (40) seitlich ein Deckel (33) angeformt ist, der über die Schnecke (12) greift und dessen Außenkontur der Form einer Ausbuchtung (13) des Getriebegehäuses (11) entspricht, in der sich die Schnecke (12) befindet.

10. Antriebsvorrichtung nach einem der Ansprüche 1 bis 6, dadurch gekennzeichnet, daß der Ring (40) dreh- oder schwenkbar ist und daß sich die Öffnung (42) nur über einen Winkel erstreckt, der kleiner als der Schwenkbereich des Getriebeteils (26) ist.

11. Antriebsvorrichtung nach Anspruch 10, dadurch gekennzeichnet, daß an das Kurbelrad (14) ein Bund (43) angeformt ist, der den Ring (40) zentriert und sich vorzugsweise innerhalb des Rings (40) befindet.

12. Antriebsvorrichtung nach einem der Ansprüche 1 bis 11, dadurch gekennzeichnet, daß die Öffnung (42) im Ring (40) in axialer Richtung zumindest auf der einen Seite durch einen Steg (50) verschlossen ist.

13. Antriebsvorrichtung nach Anspruch 12, dadurch gekennzeichnet, daß sich der Steg (50) zwischen dem Kurbelrad (14) und dem Getriebeteil (26) befindet.

**Claims**

1. A drive mechanism, especially geared motor for a windscreen wiper system of a motor vehicle, comprising a gear housing (11) for a crank wheel (14) which on its one side is rotatably mounted in the gear housing and axially supported and on which crank wheel is on its other side eccentrically and swivellably articulated a gearing element (26) which is part of a following pendulum-type gearing, the crank wheel (14) thereby also being axially supported on its other side, characterised in that the crank wheel (14) is on its other side outside the crank radius axially supported by a ring (40) and that the ring (40) has an opening (42) for being passed through by the gearing element (26) and is centred relative to the crank wheel (14).

2. A drive mechanism according to claim 1, characterised in that the ring (40) extends axially between the crank wheel (14) and a cover (41) of the gear housing (11).

3. A drive mechanism according to claim 1 or 2, characterised in that on its axial front side not facing the crank wheel (14) the ring (40) has several axially projecting supporting legs (58) distributed over its circumference.

4. A drive mechanism according to claim 3, characterised in that there is a supporting leg (58) directly located at both sides of the opening (42).

5. A drive mechanism according to one of claims 1 to 4, characterised in that a flange (51) is formed outside on the ring (40).

6. A drive mechanism according to claim 5, characterised in that the flange (51) bears a circumferential rib (54) on its outer edge.

7. A drive mechanism according to one of claims 1 to 6, characterised in that the ring (40) is arranged in a manner protected against twisting.

8. A drive mechanism according to claim 7, characterised in that at least one rib (52) is formed onto the gear housing, which rib engages in a corresponding recess (55) of the ring (40), which recess is preferably positioned on a radial stud (56) of the ring (40).

9. A drive mechanism according to claim 1 or 8, characterised in that the crank wheel (14) mates with a worm (12) and that a cover (53) is laterally formed onto the ring (40), which cover overlaps the worm (12) and the outside contour of which corresponds to the shape of a bulge (13) of the gear housing (11) in which the worm (12) is positioned.

10. A drive mechanism according to one of claims 1 to 6, characterised in that the ring (40) is rotatable or that in the axial direction the opening (42) in the ring (40) is at least on one side closed by a web (50).

11. A drive mechanism according to claim 10, characterised in that a collar (43) is formed onto the crank wheel, which collar centres the ring (40) and is preferably positioned within the ring (40).

12. A drive mechanism according to one of claims 1 to 11, characterised in that in the axial direction the opening (42) in the ring (40) is at least on one side closed by a web (50).

13. A drive mechanism according to claim 12, characterised in that the web (50) is positioned between the crank wheel (14) and the gearing element (26).

## Revendications

1. Dispositif d'entraînement, notamment moto-réducteur pour un système essuie-glace d'un véhicule automobile, comprenant une boîte d'engrenages (11) pour une roue à manivelle (14) qui, sur un côté, est montée rotative dans la boîte d'engrenages (11) et soutenue axialement, et sur l'autre côté de laquelle est articulé excentriquement en pivotement un élément de transmission (26) faisant partie d'un engrenage pendulaire secondaire, la roue à manivelle (14) étant également soutenue axialement sur son autre côté, caractérisé en ce que la roue à manivelle (14) est soutenue axialement sur son autre côté par une bague (40) à l'extérieur du rayon de la manivelle, et en ce que la bague (40) présente une ouverture (42) pour le passage de l'élément de transmission (26) et est centrée par rapport à la roue à manivelle (14).

2. Dispositif d'entraînement selon la revendication 1, caractérisé en ce que la bague (40) s'étend axialement entre la roue à manivelle (14) et un couvercle (41) de la boîte d'engrenages (11).

3. Dispositif d'entraînement selon la revendication 1 ou 2, caractérisé en ce que la bague (40) présente, sur son côté frontal axial (57) éloigné de la roue à manivelle (14), des jambes de soutien individuelles (58) réparties sur sa périphérie et dépassant axialement.

4. Dispositif d'entraînement selon la revendication 3, caractérisé en ce qu'une jambe de soutien respective (58) se trouve directement de chaque côté de l'ouverture (42).

5. Dispositif d'entraînement selon l'une des revendications 1 à 4, caractérisé en ce qu'une bride (51) est formée extérieurement sur la bague (40).

6. Dispositif d'entraînement selon la revendication 5, caractérisé en ce que la bride (51) porte sur son bord extérieur une nervure (54) qui en fait le tour.

7. Dispositif d'entraînement selon l'une des revendications 1 à 6, caractérisé en ce que la bague (40) est disposée bloquée en rotation.

8. Dispositif d'entraînement selon la revendication 7, caractérisé en ce que sur la boîte d'engrenages (11) est formée au moins une nervure (52) qui s'engage dans un évidement correspondant (55) de la bague (40) qui se trouve de préférence sur une saillie radiale (56) de la bague (40).

9. Dispositif d'entraînement selon la revendication 7 ou 8, caractérisé en ce que la roue à manivelle (14) engrène avec une vis sans fin (12), et en ce qu'un couvercle (53) est formé latéralement sur la bague (40), lequel s'étend au-dessus de la vis sans fin (12) et dont le contour extérieur correspond à la forme d'une échancrure (13) de la boîte d'engrenages (11) dans laquelle se trouve la vis sans fin (12).

10. Dispositif d'entraînement selon l'une des revendications 1 à 6, caractérisé en ce que la bague (40) est rotative ou pivotante, et en ce que l'ouverture (42) ne s'étend que sur un angle qui est inférieur à la plage de pivotement de l'élément de transmission (26).

11. Dispositif d'entraînement selon la revendication 10, caractérisé en ce qu'un collet (43) est formé sur la roue à manivelle (14), lequel centre la bague (40) et se trouve de préférence à l'intérieur de la bague (40).

12. Dispositif d'entraînement selon l'une des revendications 1 à 11, caractérisé en ce que l'ouverture (42) de la bague (40) est fermée au moins sur un côté dans le sens axial par une entretoise (50).

13. Dispositif d'entraînement selon la revendication 12, caractérisé en ce que l'entretoise (50) se trouve entre la roue à manivelle (14) et l'élément de transmission (26).

Fig. 2

Fig. 1

Fig. 4

Fig. 3

# Fig. 6

# Fig. 7

# Fig. 8

# Fig. 5